# EUROPEAN PATENT APPLICATION

(11) **EP 4 831 869 A1**
(43) Date of publication of application: **28.10.2026**
(21) Application number: 24907143.2
(22) Date of filing: 03.12.2024
(51) Int. Cl.: G06K 19/077, H01Q 9/16

(54) **RFID TAG**

(30) Priority: 21.12.2023 JP 2023215948
(71) Applicant: DAIO PAPER CORPORATION, Shikokuchuo-shi Ehime 799-0492 (JP)
(72) Inventor: SHIMADA, Takuro, Shikokuchuo-shi, Ehime 799-0431 (JP); KAN, Alina, Shikokuchuo-shi, Ehime 799-0431 (JP)
(74) Representative: Meissner Bolte Partnerschaft mbB
(86) International application number: PCT/JP2024/042665
(87) International publication number: WO 2025/134756

(57) **Abstract**

An RFID tag includes an IC chip, a loop conductor, a pair of rectangular conductors, a pair of first protrusions, a pair of second protrusions, a pair of first strip parts, and a pair of second strip parts, wherein a first distance, a second distance, and a third distance are formed in different lengths from each other, at least one of the first distance, the second distance, and the third distance is configured to be an electrical length that is a multiple of 1/4 of a wavelength of a frequency used in the RFID tag, and one or more remaining distances from among the first distance, the second distance, and the third distance is configured to be an electrical length that is different from a multiple of 1/4 of the wavelength of the frequency used in the RFID tag.

## Description

### TECHNICAL FIELD

The disclosures herein relate to RFID tags.

### BACKGROUND ART

An RFID (Radio Frequency Identificadon) tag is attached to an article to be managed, and information about the article is read and written with the tag, thereby enabling the article to be managed with high precision and ease.

For example, Patent Literature (PTL) 1 describes a configuration in which an RFID tag is attached to a cover or the like during bookbinding to be used for managing a book.

### CITATION LIST

### PATENT LITERATURE

PTL 1: Japanese Laid-Open Patent Publication 2002-326474

### SUMMARY OF THE INVENTION

### PROBLEMS TO BE SOLVED BY THE INVENTION

Note that when an RFID tag is applied to management of an article, it is desirable that the tag size can be reduced in order to improve versatility. However, when the tag size is reduced, an inlay size becomes relatively small. This may deteriorate communication performance of the tag.

The present disclosure aims to provide an RFID tag capable of reducing deterioration in communication performance and improving versatility even when the tag size is reduced.

### MEANS OF SOLVING THE PROBLEM

An RFID (Radio Frequency Identification) tag includes an IC chip configured to record identification information, a loop conductor formed into a loop shape, the loop conductor connected to the IC chip, a pair of rectangular conductors, each of the rectangular conductors extending from the loop conductor to a corresponding side of both sides in a first direction, and each of the rectangular conductors being formed into a rectangular shape, a pair of first protrusions, each of the protrusions being provided on a corresponding rectangular conductor of the pair of rectangular conductors and protruding outward relative to the rectangular conductors in a second direction, the second direction being orthogonal to the first direction, from one side of the second direction, a pair of second protrusions, each of the second protrusions provided on a corresponding rectangular conductor of the pair of rectangular conductors and protruding outward relative to the rectangular conductors in the second direction from another side of the second direction, a pair of first strip parts, each of the first strip parts formed in a strip shape and provided to protrude along the first direction from a corresponding first protrusion of the pair of first protrusions toward a center in the first direction, and a pair of second strip parts, each of the second strip parts formed in a strip shape and provided to protrude along the first direction from a corresponding second protrusion of the pair of second protrusions toward the center in the first direction, wherein a first distance, which is a distance from the IC chip to an end of both ends of the pair of rectangular conductors in the first direction, a second distance, which is a distance from the IC chip to a tip of each of the pair of first strip parts, and a third distance, which is a distance from the IC chip to a tip of each of the pair of second strip parts, are formed in different lengths from each other, at least one of the first distance, the second distance, and the third distance is configured to be an electrical length that is a multiple of 1/4 of a wavelength of a frequency used in the RFID tag, and one or more remaining distances from among the first distance, the second distance, and the third distance is configured to be an electrical length that is different from a multiple of 1/4 of the wavelength of the frequency used in the RFID tag.

According to this aspect, a plurality of current paths having different lengths can be formed by providing an antenna pattern of the inlay as described above. This makes it possible to increase the range of operating frequencies, thereby reducing deterioration in communication performance even when the tag size is reduced, and improving versatility.

In the RFID tag according to another aspect of the present invention, the IC chip is disposed at the center in the first direction and at a position deviated to one side from a center in the second direction, and a length in the first direction of each first strip part of the pair of first strip parts and a length in the first direction of each second strip part of the pair of second strip parts are same.

According to this aspect, in the antenna pattern in which the IC chip is disposed at a position deviated to one side from the center of the second direction, the second distance and the third distance can be reliably made different in length, so that the variation of the use frequency can be reliably increased.

In the RFID tag according to another aspect of the present invention, the IC chip is disposed at the center in the first direction and at a center in the second direction, and a length in the first direction of each first strip part of the pair of first strip parts and a length in the first direction of each second strip part of the pair of second strip parts are formed to be different.

According to this aspect, in an antenna pattern in which the IC chip is disposed at the center in both the first and second directions, the second distance and the third distance can be reliably set to different lengths, thereby increasing the range of operating frequencies.

### EFFECTS OF THE INVENTION

According to the present disclosure, it is possible to provide an RFID tag capable of reducing deterioration in communication performance and improving versatility even when the tag size is reduced.

### BRIEF DESCRIPTION OF THE DRAWINGS

[FIG. 1] FIG. 1 is a cross-sectional view illustrating an RFID tag according to a first embodiment, showing a stacked structure.
[FIG. 2] FIG. 2 is a plan view illustrating the RFID tag shown in FIG. 1 viewed from above.
[FIG. 3] FIG. 3 is a drawing illustrating an example of a dimension of each part of a conductor pattern of an inlay shown in FIG. 2.
[FIG. 4] FIG. 4 is a drawing illustrating an example of a configuration in which the RFID tag according to the first embodiment is attached to a book as an attachment target.
[FIG. 5] FIG. 5 is a drawing illustrating an example of a method for reading information from RFID tags attached to a plurality of books as attachment targets.
[FIG. 6] FIG. 6 is a drawing describing an effect according to the first embodiment.
[FIG. 7] FIG. 7 is a plan view illustrating an RFID tag according to a second embodiment.
[FIG. 8] FIG. 8 is a drawing describing an effect according to the second embodiment.
[FIG. 9] FIG. 9 is a schematic diagram illustrating a measurement environment of a first test according to Example 1.
[FIG. 10] FIG. 10 is a plan view illustrating the measurement environment shown in FIG. 9.
[FIG. 11] FIG. 11 is a plan view illustrating a conductor pattern of an RFID tag used in Comparative Example 1.
[FIG. 12] FIG. 12 is a drawing illustrating frequency characteristics of Example 2 and Comparative Example 2 measured in a second test.

### DESCRIPTION OF THE PREFERRED EMBODIMENTS

In the following, embodiments of the present invention will be described with reference to the accompanying drawings. In the drawings, the same components are denoted with the same reference numerals, and redundant description thereabout may be omitted.

### [First Embodiment]

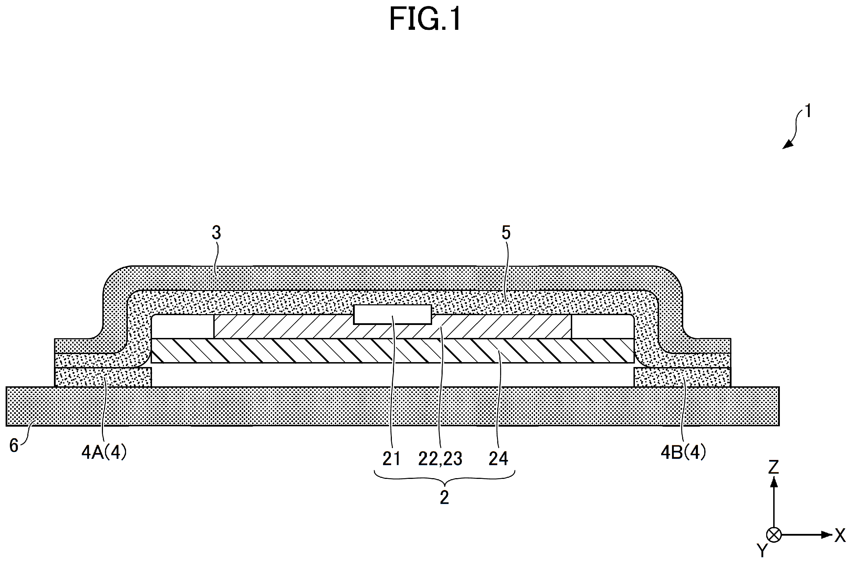

A first embodiment will be described with reference to FIGS. 1 to 6.

In the following description, X-, Y-, and Z-directions are mutually orthogonal. The X-direction is a longitudinal direction of each component of an RFID tag 1 such as an inlay 2. The Y-direction is a short direction of each component of the RFID tag 1 such as the inlay 2. The Z-direction is a stacking direction of each component of the RFID tag such as the inlay 2. For convenience of explanation, a positive direction of a Z-axis may be referred to as a front or a top, and a negative direction of the Z-axis may be referred to as a back or a bottom.

### <Structure of RFID Tag 1>

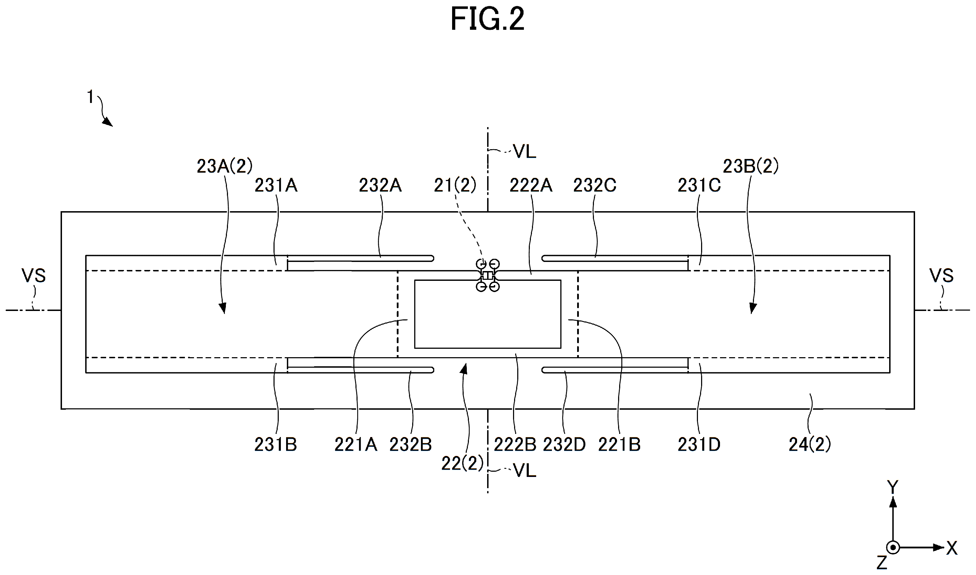

FIG. 1 is a cross-sectional view illustrating an RFID tag 1 according to a first embodiment, showing a stacked structure. FIG. 2 is a plan view illustrating the RFID tag 1 shown in FIG. 1 viewed from above. FIG. 2 shows only components related to the inlay 2 in FIG. 1. The RFID tag 1 is a substantially planar device to be attached to an attachment target. As shown in FIGS. 1 and 2, the RFID tag 1 incorporates the inlay 2.

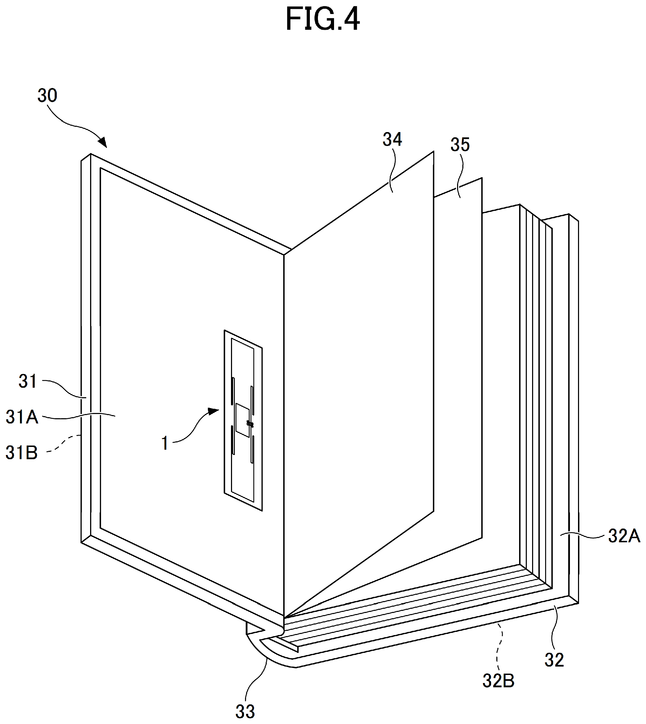

The attachment target includes, for example, a book 30 such as a book or a magazine, as described later with reference to FIG. 4. Further, the attachment target is not limited to the book 30, and may be an article that is mainly stacked vertically or horizontally during storage, an article formed by stacking a large amount of paper as in the book 30, or an article formed of a moisture-containing material such as paper as in the book 30. Examples of such articles include cards such as trading cards, stationery such as clear files and notebooks, food products such as confectionery, newspapers, tickets, and coupons.

Preferably, the RFID tag 1 of the first embodiment is flexible and can be attached even when the surface of an adherend is curved. Even when bent into a curved shape, good communication performance can be exhibited, and the RFID tag 1 of the first embodiment can be used to identify an article having a curved surface, thereby diversifying applications. As shown in FIG. 2, the RFID tag 1 of the first embodiment is formed in a rectangular shape in which the X-direction is the longitudinal direction (first direction) and the Y-direction is the short direction (second direction orthogonal to the first direction) in a plan view viewed from the Z-direction.

The inlay 2 includes components related to the function of the RFID tag 1 and, as shown in FIG. 2, includes an IC chip 21 for recording identification information, a loop conductor 22 connected to the IC chip 21, and a pair of rectangular conductors 23A and 23B. Note that, in the following description, the pair of rectangular conductors 23A and 23B may be collectively referred to as a "rectangular conductor 23", which is so indicated in FIG. 1.

The inlay 2 includes the loop conductor 22 and the rectangular conductor 23 formed by dry lamination of an aluminum sheet on a base material 24 made of, for example, a synthetic resin film such as polyethylene terephthalate or polypropylene, and the IC chip 21 mounted at a predetermined position.

In the RFID tag 1 of the first embodiment, a shape of the inlay 2, in particular, a shape of the antenna pattern including the loop conductor 22 and the pair of rectangular conductors 23A and 23B, is, as in the case of the RFID tag 1, formed in a rectangular shape in which the X-direction is the longitudinal direction (first direction) and the Y-direction is the short direction (second direction) in a plan view viewed from the Z-direction as shown in FIG. 2.

The IC chip 21 has internal capacitance, and a matching circuit includes inductance of the rectangular conductor 23 and the internal capacitance of the IC chip 21.

The loop conductor 22 is a loop (loop-shaped) conductive wiring pattern having one turn or less in plan view as viewed from the Z-direction. In the first embodiment, the loop conductor 22 may be formed in a loop shape having at least a pair of opposite sides that extend in the short direction (Y-direction) of the RFID tag 1 and are arranged opposite to both ends in the longitudinal direction (X-direction). In the first embodiment, the loop conductor 22 is formed in a rectangular loop shape having a pair of short sides 221A and 221B and a pair of long sides 222A and 222B, as shown in FIG. 2. In the present embodiment, the pair of short sides 221A and 221B function as the above-described "pair of opposite sides".

In the first embodiment, the pair of long sides 222A and 222B function as a "pair of second opposite sides" that extend in the long direction (X-direction) and are arranged opposite to each other in the short direction (Y-direction). In the pair of short sides 221A and 221B, one short side 221A is arranged on a X-negative-direction side (left side in FIG. 2) and the other short side 221B is arranged on the X-positive-direction side (right side in FIG. 2). In the pair of long sides 222A and 222B, one long side 222A is arranged on a Y-positive-direction side (top in FIG. 2) and the other long side 222B is arranged on a Y-negative-direction side (bottom in FIG. 2).

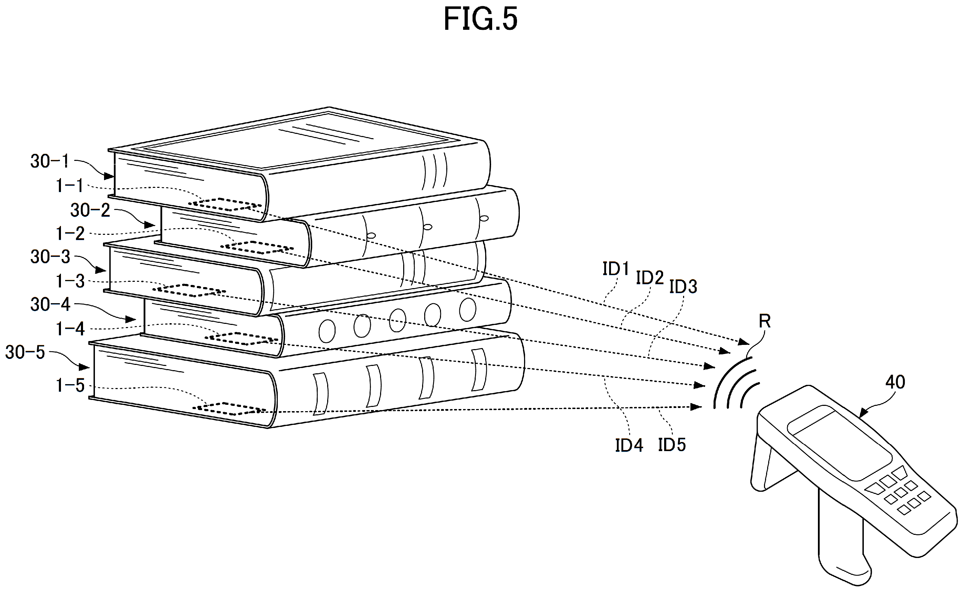

The loop conductor 22 is electrically connected to the IC chip 21 and the rectangular conductor 23. When identification information recorded in the IC chip 21 is read by an RFID reader 40 (see FIG. 5), a current flows through the loop conductor 22 due to resonance when the rectangular conductor 23 of the inlay 2 receives a UHF-band radio wave, for example, a radio wave near 920 MHz. Thus, an electromotive force is generated to operate the IC chip 21. When the IC chip 21 operates, the identification information recorded in the IC chip 21 is encoded by the IC chip 21, and the encoded data is wirelessly transmitted to a communication device such as the RFID reader 40 using a radio wave in the vicinity of 920 MHz as a carrier wave. When the RFID reader 40 receives this signal, the RFID reader 40 decodes the signal and transfers it to an external device. As described above, the RFID tag 1 of the present embodiment is a passive radio wave type radio tag which does not have a power source (battery) for holding and transmitting identification information. Therefore, compared with an active radio tag which has a battery, miniaturization and lower cost can be achieved because the RFID tag 1 does not have a battery.

For example, as shown in FIG. 2, the loop conductor 22 is disposed substantially at the center of the inlay 2. The IC chip 21 is superposed on the loop conductor 22 and is electrically connected to the loop conductor 22. In the first embodiment, a connection position with the IC chip 21 is provided at a position substantially at the center in the X-direction of one of the long sides 222A of the loop conductor 22. Thus, when the IC chip 21 is connected to the loop conductor 22, the IC chip 21 is disposed at the center in the longitudinal direction of the RFID tag 1 and at a position deviated to one side (the Y-positive-direction side in the example of FIG. 2) from the center in the short direction of the RFID tag 1.

The pair of rectangular conductors 23A and 23B extends from the pair of short sides 221A and 221B of the loop conductor 22 to both sides in the longitudinal direction (X-direction) of the tag and is formed into a rectangular shape. The term "rectangular shape" as used in the present embodiment includes a substantially rectangular shape, and includes a case where the lengths of two adjacent sides are slightly different or adjacent corners are not exactly right angles.

Each rectangular conductor of the pair of rectangular conductors 23A and 23B is provided with a pair of protrusions 231 protruding outward in the short direction from the loop conductor 22 at both ends in the short direction (Y-direction) of the tag. One of the rectangular conductors 23A has a pair of protrusions 231A and 231B, with one protrusion 231A protruding toward the Y-positive-direction and the other protrusion 231B protruding toward the Y-negative-direction. The other of the rectangular conductors 23B has a pair of protrusions 231C and 231D, with one protrusion 231C protruding toward the Y-positive-direction and the other protrusion 231D protruding toward the Y-negative-direction. In the following description, in each rectangular conductor of the pair of rectangular conductors 23A and 23B, the protrusions 231A and 231C protruding outward in the short direction from the loop conductor 22 from one side (the Y-positive-direction side in the example of FIG. 2) in the short direction of the rectangular shape of the RFID tag 1 will be referred to as "pair of first protrusions 231A and 231C." Similarly, in each rectangular conductor of the pair of rectangular conductors 23A and 23B, the protrusions 231B and 231D protruding from the other side of the rectangular shape of the RFID tag 1 in the short direction (Y-negative-direction side in the example of FIG. 2) to the outside of the loop conductor 22 in the short direction are referred to as "pair of second protrusions 231B and 231D."

In the example of FIG. 2, the outer edge of each protrusion 231 in the X-direction is disposed so as to coincide with the outer edge of the rectangular conductor 23 in the X-direction. In FIG. 2, for convenience of explanation, boundary lines on a Y-direction-center side (i.e., a second virtual line VS side) of portions corresponding to each of the pair of protrusions 231A and 231B of the rectangular conductor 23A, and boundary lines on a Y-direction-center side of portions corresponding to each of the pair of protrusions 231C and 231D of the other rectangular conductor 23B, are illustrated by dotted lines. However, in reality, the protrusions 231A to 231D are seamlessly formed with the rectangular conductors 23A and 23B.

Furthermore, each rectangular conductor of the pair of rectangular conductors 23A and 23B is provided with a strip part 232 protruding from the protrusion 231 in the longitudinal direction toward the center side in the longitudinal direction (X-direction) of the tag and formed in a strip shape. In one of the rectangular conductors 23A, the strip parts 232A and 232B are formed so as to protrude from the pair of protrusions 231A and 231B in the X-direction toward the X-positive-direction side. In the other rectangular conductor 23B, the strip parts 232C and 232D are formed so as to protrude from the pair of protrusions 231C and 231D in the X-direction toward the X-negative-direction side. In the example of FIG. 2, the outer edge in the Y-direction of each of the strip parts 232 is disposed so as to be at the same position as the outer edge in the Y-direction of the protrusion 231. In the following description, the strip parts 232A and 232C provided so as to protrude from the pair of first protrusions 231A and 231C in the longitudinal direction toward the center of the rectangular shape of the RFID tag 1 in the longitudinal direction (the X-direction in the example of FIG. 2) will be referred to as "a pair of first strip parts 232A and 232C." Similarly, the strip parts 232B and 232D provided so as to protrude from the pair of second protrusions 231B and 231D in the longitudinal direction toward the center of the longitudinal direction of the rectangular shape of the RFID tag 1 are referred to as "a pair of second strip parts 232B and 232D."

In FIG. 2, for convenience of explanation, boundary lines between base ends of the pair of strip parts 232A and 232B on the X-negative-direction side and the respective protrusions 231A and 231B of the rectangular conductor 23A, and boundary lines between base ends of the pair of strip parts 232C and 232D on the X-positive-direction side and the respective protrusions 231C and 231D of the rectangular conductor 23B are illustrated by dotted lines. However, in reality, the strip parts 232A to 232D are seamlessly formed with the rectangular conductors 23A and 23B.

That is, the strip part 232 includes the pair of first strip parts 232A and 232C that protrudes from the protrusions 231A and 231C of the pair of rectangular conductors 23A and 23B, respectively, on one long side 222A of the pair of long sides 222A and 222B of the loop conductor 22. Similarly, the strip part 232 includes the pair of second strip parts 232B and 232D that protrudes from the protrusions 231B and 231D of the pair of rectangular conductors 23A and 23B, respectively, on the other long side 222B.

As shown in FIG. 2, it is preferable that each strip part 232 is formed so as not to overlap a portion of the loop conductor 22 where the IC chip 21 is installed when viewed from the short direction (Y-direction) of the tag. As a result, since the conductor pattern is not interposed on the outer side of the IC chip 21 in the Y-direction, it is considered that the wireless transmission performance of the IC chip 21 can be improved especially in the Y-direction, and it is possible to further reduce deterioration in communication performance due to the influence of moisture contained in the attachment target or the influence of the proximity of RFID tags attached to a plurality of attachment targets.

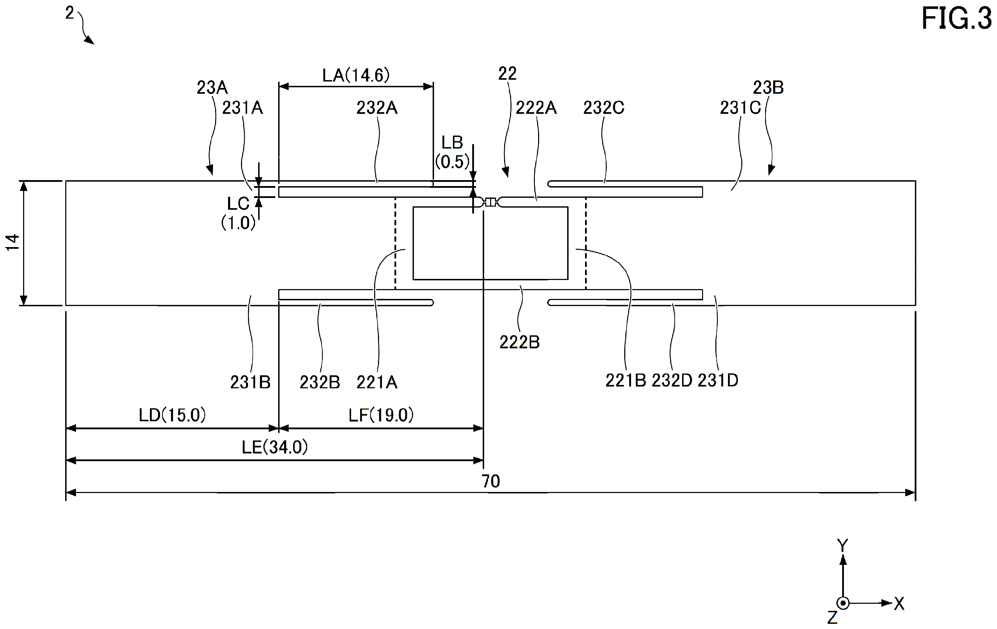

The width (dimension in the Y-direction, LB in FIG. 3) of each strip part 232 is formed smaller than the amount of protrusion of each of the protrusions 231 from the rectangular conductor 23 in the Y-direction. Thus, a clearance (LC in FIG. 3) is formed between each strip part 232 and the rectangular conductor 23 or the loop conductor 22.

The pair of rectangular conductors 23A and 23B function as dipole antennas configured to exhibit resonance characteristics with respect to the frequency of radio waves for wireless communication (e.g., a frequency in the UHF band) with respect to the IC chip 21. The rectangular conductors 23A and 23B, which function as dipole antennas, have a total electrical length corresponding to approximately λ/2 (λ is an operating wavelength). The pair of rectangular conductors 23A and 23B have a structure for achieving impedance conjugate matching with respect to radio waves having a frequency of, for example, approximately 920 MHz (e.g., 860 MHz to 960 MHz, more preferably 915 MHz to 935 MHz) with respect to the IC chip 21.

The conductive wiring pattern of the inlay 2 including the loop conductor 22 and the rectangular conductor 23 can be formed by known methods such as press working and etching of copper foil or aluminum foil, plating, screen printing of metal paste, or use of metal wires. However, it is formed by etching of aluminum here.

As shown in FIG. 2, the conductive wiring pattern of the inlay 2 including the loop conductor 22 and the rectangular conductor 23 is preferably formed symmetrically with respect to a first virtual line VL passing through approximately the center of the RFID tag 1 in the longitudinal direction (the position where the IC chip 21 is disposed in FIG. 2) in plan view. The first virtual line VL is parallel to an XY-plane and extends in the Y-direction. The first virtual line VL also approximately bisects the RFID tag 1 into two regions along the X-direction. In FIG. 2, the first virtual line VL is shown by chain lines extending along the Y-direction.

Similarly, as shown in FIG. 2, the conductive wiring pattern of the inlay 2 including the loop conductor 22 and the rectangular conductor 23 is preferably formed symmetrically with respect to the second virtual line VS passing through approximately the center of the RFID tag 1 in the short direction in plan view. The second virtual line VS is a line that is parallel to the XY-plane and extends in the X-direction. The second virtual line VS also approximately bisects the RFID tag 1 into two regions along the Y-direction. In FIG. 2, the second virtual line VS is shown by chain lines extending along the X-direction.

That is, in the present embodiment, the conductive wiring pattern of the inlay 2 including the loop conductor 22 and the rectangular conductor 23 is formed so as to be linearly symmetrical with respect to both the X-direction and the Y-direction.

Further, as shown in FIG. 2, the pair of rectangular conductors 23A and 23B is preferably formed so as to protrude in the X-direction from the entire area extending in the extending direction (Y-direction) of the pair of short sides 221A and 221B. That is, a left short side 221A in FIG. 2 and the rectangular conductor 23A are preferably seamlessly formed, and a right short side 221B in FIG. 2 and the rectangular conductor 23B are preferably seamlessly formed.

In FIG. 2, for convenience of explanation, a boundary line between one rectangular conductor 23A and one short side 221A and a boundary line between the other rectangular conductor 23B and the other short side 221B are illustrated by dotted lines, but the pair of rectangular conductors 23A and 23B are actually seamlessly formed with the loop conductor 22. That is, the boundary lines between the pair of rectangular conductors 23A and 23B and the pair of short sides 221A and 221B, the boundary lines between the pair of rectangular conductors 23A and 23B and the four protrusions 231A to 231D, and the boundary lines between the four protrusions 231A to 231D and the four strip parts 232A to 232D, which are illustrated by dotted lines in FIG. 2, are not actually formed on the conductor pattern of the inlay 2.

The pair of rectangular conductors 23A and 23B may be formed so as to protrude in the X-direction from the pair of short sides 221A and 221B, or may be formed so as to protrude in the X-direction from only a portion of the pair of short sides 221A and 221B in the extending direction (Y-direction).

FIG. 3 is a drawing illustrating an example of a dimension of each part of a conductor pattern of the inlay 2 shown in FIG. 2. In the example of the dimensions shown in FIG. 3, all the conditions relating to the shape of the loop conductor 22 and the rectangular conductor 23 described above are satisfied.

Here, in the RFID tag 1 of the first embodiment, the dimension of the inlay 2 in the longitudinal direction (X-direction) is 70 mm, and the dimension of the inlay 2 in the short direction (Y-direction) is 14 mm.

Further, in the example shown in FIG. 3, the dimension LA of each strip part 232A to 232D in the longitudinal direction (X-direction) is, for example, 14.6 mm, and is preferably in the range of 4.6 mm to 19.6 mm. The width dimension LB of each strip part 232A to 232D in the Y-direction is, for example, 0.5 mm, and is preferably in the range of 0.5 mm to 1.5 mm. The clearance dimension LC of each strip part 232A to 232D and the rectangular conductors 23A and 23B in the Y-direction is, for example, 1.0 mm, and is preferably in the range of 1.0 mm to 2.0 mm.

The dimension LD of the rectangular conductor 23A from its end on the X-negative-direction side to the base of the strip parts 232A and 232B and the dimension LD of the rectangular conductor 23B from its end on the X-positive-direction to the base of the strip parts 232C and 232D are, for example, 15.0 mm. The dimension LE of the pair of rectangular conductors 23A and 23B from the installation position of the IC chip 21 on the loop conductor 22 to both ends in the longitudinal direction (X-direction) is, for example, 34.0 mm. In this example, based on the dimensions LD and LE, the dimension LF from the installation position of the IC chip 21 on the loop conductor 22 to the base of the first strip parts 232A and 232C is 19.0 mm.

Since the RFID tag 1 according to the first embodiment includes the loop conductor 22 and the rectangular conductor 23 formed by the conductive pattern shown in FIG. 2 as described above, it is possible to reduce the deterioration of communication performance due to the influence of moisture contained in the attachment target and the influence of proximity of RFID tags attached to a plurality of attachment targets.

In the first embodiment, for convenience of explanation, the loop conductor 22 and the rectangular conductor 23 are separate components, and are shown separately by dotted lines in FIG. 2. However, in the present embodiment, the loop conductor 22 and the rectangular conductor 23 are actually seamlessly formed as described above, and a position dividing the loop conductor 22 and the rectangular conductor 23 shown by dotted lines in FIG. 2 is only an example. That is, in the first embodiment, not only the rectangular conductor 23 but also at least a part of the loop conductor 22 may function as an antenna part. Similarly, at least a part of the rectangular conductor 23 may function as a loop conductor.

As shown in FIG. 1, in the RFID tag 1 of the first embodiment, a label paper (film type tack paper) 3 is further disposed above the inlay 2. The label paper 3 can be printed on the surface on the positive direction side of the Z-axis. The material of the label paper 3 can be appropriately selected, and a material other than paper such as a resin material may be applied if it is printable.

Further, the label paper 3 is formed so that the dimension in the X-direction is larger than that of the inlay 2, and the inlay 2 is arranged at the center, and surplus portions which do not overlap with the inlay 2 are provided on both sides in the X-direction. On the back surface of the surplus portion on the negative side of the Z-axis, an adhesive part 4 having adhesiveness on a contact surface (lower surface in FIG. 1) with the attachment target is provided. Thus, the inlay 2 and the adhesive part 4 are arranged so that they do not overlap in plan view. In the example of FIG. 1, a pair of adhesive parts 4A and 4B are arranged on the positive side and the negative side of the X-axis with the inlay 2 as a reference.

The adhesive part 4 comes into contact with the attachment target and adheres to the attachment target by its adhesive force, whereby the entire RFID tag 1 is attached to the attachment target.

The adhesive part 4 is preferably formed of, for example, an adhesive type hot melt. The hot melt is a thermoplastic adhesive which is solid at room temperature but becomes liquefied by heating and melting and is applied to an adherend and forms a bond by cooling and solidification, and the adhesive type hot melt has a property of having an adhesive force on the exposed surface even after cooling and solidification. Further, the adhesive part 4 is preferably formed by using a bio-derived resource (biomass) or a biodegradable material. The biomass content of the adhesive part 4 is, for example, 25%.

A bonding part 5 is stacked on the back surface of the label paper 3 in the negative direction of the Z-axis. The bonding part 5 is bonded to the upper surface of the inlay 2 and the upper surface of the adhesive part 4, whereby the inlay 2 and the adhesive part 4 are covered with the label paper 3. In addition, the bonding part 5 can enter a clearance formed by the inlay 2 and the label paper 3 above the inlay 2 and fill the clearance during stacking.

The bonding part 5 is preferably formed by, for example, a non-adhesive type hot melt. The non-adhesive type hot melt has a property of not having adhesive force on the exposed surface after cooling and solidification. Like the adhesive part 4, the bonding part 5 is preferably formed by using a bio-derived resource (biomass) or a biodegradable material.

A release paper 6 is arranged below the adhesive part 4 on the RFID tag 1 before use. The release paper 6 is formed, for example, with a size equal to or larger than that of the label paper 3, and the label paper 3 and the release paper 6 are adhered to each other by the adhesive part 4. Thus, the pair of adhesive parts 4A and 4B on both sides of the label paper 3 in the X-direction can be prevented from being exposed to the outside before being used for attaching to the attachment target, and the adhesive force can be maintained. When the RFID tag 1 is used, the release paper 6 is peeled from the RFID tag 1, and the RFID tag 1 is attached to the attachment target by the adhesive parts 4A and 4B of the label paper 3 exposed thereby.

The release paper 6 may be formed larger than that illustrated in FIG. 1, and a plurality of RFID tags 1 may be arranged on one release paper 6. Thus, the manufacturing efficiency and the conveying efficiency can be improved.

The thickness of the RFID tag 1 according to the first embodiment in the Z-direction (excluding the release sheet 6) is 80 µm to 260 µm, preferably 150 to 230 µm. The thickness of the adhesive part 4 in the Z-direction is preferably about 10 µm to 30 µm.

In the RFID tag 1 according to the first embodiment, as described above, the inlay 2 and the adhesive part 4 are arranged so as not to overlap each other in plan view, and in the examples of FIGS. 1 and 2, a pair of adhesive parts 4A and 4B are arranged on the positive direction side and the negative direction side of the X-axis with respect to the inlay 2. With this configuration, the inlay 2 itself is not directly attached to the attachment target, but is indirectly attached to the attachment target via the adhesive part 4.

The stacked structure of the RFID tag 1 is not limited to that shown in FIG. 1. For example, the label paper 3 may be formed in the same size as the inlay 2. In this case, since the outer edge portion of the label paper 3 cannot contact the attachment target, the adhesive part 4 is provided on the entire lower surface of the base material 24 of the inlay 2 facing the attachment target, and the inlay 2 is directly attached to the attachment target. In the configuration shown in FIG. 1, adhesive parts may be continuously provided between the pair of adhesive parts 4A and 4B to form a single adhesive layer. In this case, the inlay 2 is also directly attached to the attachment target.

The RFID tag 1 may also have a configuration in which components such as a magnetic sheet, a spacer layer, and a dielectric layer are further stacked on the attachment target side (bottom in FIG. 1) of the inlay 2. The magnetic sheet is a sheet material containing a magnetic material and preferably has excellent magnetic shielding characteristics against radio waves in a frequency band (e.g., UHF band) used for reading the IC chip 21. The spacer layer is a component for arranging the inlay 2 in a state of being separated from the attachment target by the thickness thereof, and is preferably formed of an insulator such as a woven fabric or a nonwoven fabric made of fibers such as cardboard or synthetic resin, or a sheet made of an inorganic material such as ceramic glass. The dielectric layer is preferably formed of an insulator material having a relative dielectric constant of approximately 1.2 to 3.0, thereby increasing the communication range of the RFID tag 1.

### <Application Example of RFID Tag 1>

FIG. 4 is a drawing illustrating an example of a configuration in which the RFID tag 1 according to the first embodiment is attached to the book 30 as an attachment target. As shown in FIG. 4, when the attachment target is the book 30, the RFID tag 1 can be attached to, for example, an inner surface 31A of the back cover 31. Further, when the attachment target is the book 30, for example, various bibliographic information about the book 30 to which the tag is attached can be recorded in the IC chip 21 of the RFID tag 1.

When the attachment target is the book 30, the attachment position of the RFID tag 1 is not limited to the example shown in FIG. 4, and may be other positions such as an outer surface 31B of a back cover 31, an inner surface 32A or an inner surface 32B of a front cover 32, a spine 33, endpapers 34, a title page 35, and the like. In order to read the information from the RFID tag 1 with high accuracy, it is preferable that the attachment position of the RFID tag 1 be as close as possible to the outer surface of the book 30 so as to minimize a barrier between the RFID tag 1 and a reader such as the RFID reader 40 (see FIG. 5).

FIG. 5 is a drawing illustrating an example of a method for reading information from RFID tags 1-1 to 1-5 attached to a plurality of books 30-1 to 30-5 as attachment targets. As shown in FIG. 5, consider a case in which the RFID tags 1-1 to 1-5 are attached to the plurality of books 30-1 to 30-5, respectively, and the plurality of books 30-1 to 30-5 are stacked in the vertical direction.

In this case, a user operates the RFID reader 40, that is a small, lightweight, and portable reader such as the RFID reader 40 shown in FIG. 5, after approaching the stacked books 30-1 to 30-5. Thus, the information ID1 to ID5 related to the books 30-1 to 30-5 recorded on the RFID tags 1-1 to 1-5 can be collectively read from the RFID tags 1-1 to 1-5 attached to the books 30-1 to 30-5.

It is also possible to read the information ID1 to ID5 from the RFID tags 1-1 to 1-5 by placing the books 30-1 to 30-5 stacked in a readable range of the reader. In addition, when the plurality of books 30-1 to 30-5 are closely arranged on a bookshelf, that is, even when a plurality of books are stacked horizontally, the information ID1 to ID5 can be collectively read from the RFID tags 1-1 to 1-5 in the same manner as described above.

It is to be noted that the books 30 are produced by binding a large number of sheets of paper. In addition, as shown in FIG. 5, a large number of books 30-1 to 30-5 are often stacked flat when they are sold or stored in a bookstore or when they are stored in a library. Therefore, for example, when the RFID tag 1 is attached to a front cover portion such as the front cover 32 and the back cover 31, or the endpapers 34 or the title page 35 close to the front cover portion, the RFID tags 1-1 to 1-5 of the books 30-1 to 30-5 stacked flat may be interposed between the upper and lower books. Therefore, the communication range of the RFID tags may be reduced due to the influence of the proximity of the RFID tags attached to the books 30-1 to 30-5 and the influence of moisture contained in a large number of sheets of paper forming the books 30-1 to 30-5, and reading accuracy of the RFID tags may be deteriorated. The same problem may also occur when a plurality of books 30 are closely arranged on a bookshelf.

Conversely, as described above, since the RFID tag 1 of the first embodiment includes the loop conductor 22 and the rectangular conductor 23 formed by the conductive pattern shown in FIG. 2, it is possible to reduce deterioration in communication performance due to the influence of moisture contained in an attachment target (e.g., book 30) or the influence of proximity of RFID tags 1-1 to 1-5 to a plurality of attachment targets (e.g., books 30-1 to 30-5). Therefore, in particular, if the RFID tag 1 of the first embodiment is applied to an attachment target formed by stacking a large number of papers such as books 30, the effect of reducing deterioration in communication performance can be exhibited more remarkably. Furthermore, since the same effect can be obtained even when the plurality of books 30-1 to 30-5 are stacked, it is possible to read information ID1 to ID5 from each tag 1-1 to 1-5 with high accuracy.

### <Effect of RFID Tag 1>

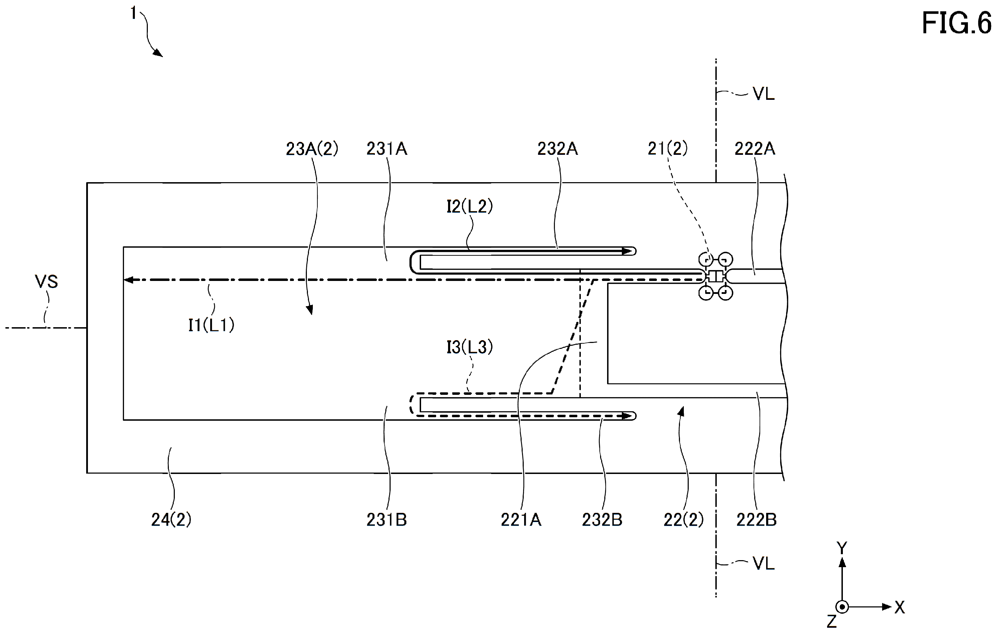

The effect of the RFID tag 1 according to the first embodiment will be further described with reference to FIG. 6. FIG. 6 is a drawing describing the effect according to the first embodiment, and a drawing schematically illustrating the antenna part of the RFID tag 1 has a plurality of current paths of electrical lengths L1, L2, and L3.

In FIG. 6, for convenience of illustration, a portion of the RFID tag 1 on the positive direction side (right side of the figure) from the center of the RFID tag 1 in the X-direction is omitted. Thus, in FIG. 6, only one rectangular conductor 23A on the X-negative-direction side of the pair of rectangular conductors 23A and 23B is shown. Similarly, only one first strip part 232A disposed on the X-negative-direction side of the pair of first strip parts 232A and 232C is shown, and only one second strip part 232B disposed on the X-negative-direction side of the pair of second strip parts 232B and 232D is shown. In the following description, the operation and effect of the portion including the one rectangular conductor 23A, the first strip part 232A, and the second strip part 232B will be described with reference to FIG. 6. However, the same operation and effect are also obtained in the portion including the other rectangular conductor 23B, the first strip part 232C, and the second strip part 232D on the X-positive-direction side, which are not shown in FIG. 6.

As described above, in the RFID tag 1 of the first embodiment, the IC chip 21 is disposed at the center of the RFID tag 1 in the longitudinal direction, and is disposed at a position deviated to one side (the Y-positive-direction side in the example of FIG. 2) from the center of the RFID tag 1 in the short direction. That is, the IC chip 21 is disposed closer to the pair of first strip parts 232A and 232C than to the pair of second strip parts 232B and 232D. Moreover, the lengths of the pair of first strip parts 232A and 232C and the pair of second strip parts 232B and 232D in the longitudinal direction (X-direction), that is, the dimensions LA illustrated in FIG. 3, are all the same.

In the RFID tag 1 of the first embodiment, by the arrangement of the IC chip 21 and the lengths of the strip parts 232, as shown in FIG. 6, a first distance L1 from the IC chip 21 to both ends of the pair of rectangular conductors 23A and 23B in the longitudinal direction (X-direction), a second distance L2 from the IC chip 21 to the tips of the pair of first strip parts 232A and 232C, and a third distance L3 from the IC chip 21 to the tips of the pair of second strip parts 232B and 232D have different lengths. In the dimensional example shown in FIG. 3, the distances L1 to L3 shown in FIG. 6 satisfy first distance L1 < second distance L2 < third distance L3.

At least one of the first distance L1, the second distance L2, and the third distance L3 is set to have an electrical length that is a multiple of 1/4 of the wavelength of the use frequency of the RFID tag 1. The remainder of the first distance L1, the second distance L2, and the third distance L3 is set to have an electrical length that is different from an electrical length that is a multiple of 1/4 of the wavelength of the use frequency of the RFID tag 1.

Here, the dimension of the antenna part of the inlay 2 in the longitudinal direction (X-direction), that is, the dimension from the end of the rectangular conductor 23A on the X-negative-direction side to the end of the rectangular conductor 23B on the X-positive-direction side, is formed by a half-length of the wavelength of the highest frequency among the use frequencies applicable as the carrier frequency of the RFID tag 1. Here, if the highest frequency is f1, the relationship between the frequency f1 and the wavelength λ1 is λ1 = c (speed of light) / f1. Then, the dimension of the inlay 2 in the longitudinal direction is (λ1)/2.

As shown by a chain line in FIG. 6, the current I1 flowing from the connection portion with the IC chip 21 into the inlay 2 travels the shortest path in the X-direction in a substantially linear manner toward both ends of the rectangular conductors 23A and 23B. As a result, the length of the current path of the current I1 (i.e., the first distance L1) is approximately (λ1)/2. Therefore, the antenna part of the inlay 2 can resonate at the radio wave having the carrier frequency f1 of the wavelength λ1, and communication can be established with a reader/writer at a desired distance.

Further, as shown by a solid line in FIG. 6, the current I2 flowing from the connection portion with the IC chip 21 to the inlay 2 initially travels the shortest path in a substantially linear manner along the X-direction and proceeds in the direction toward both ends of the rectangular conductors 23A and 23B. Next, when it reaches the position of the end on the center side in the X-direction of the protrusions 231A and 231C, it proceeds along this end changing the traveling direction to the Y-positive-direction side. Then, when reaching the position of the base of the first strip parts 232A and 232C, it proceeds along the first strip parts 232A and 232C changing the traveling direction to the center side in the X-direction and proceeds toward the tip of the first strip parts 232A and 232C. Thus, the length of the current path of the current I2 (i.e., the second distance L2) becomes longer than the first distance L1= (λ1)/2. Therefore, the antenna part of the inlay 2 can resonate at the radio wave of the carrier frequency f2 of the wavelength λ2 longer than the wavelength λ1, and communication can be established between the reader/writer at a desired distance.

Further, as shown by a dotted line in FIG. 6, the current I3 flowing from the connection portion with the IC chip 21 to the inlay 2 initially travels in a substantially linear manner along the X-direction and proceeds in the direction toward both ends of the rectangular conductors 23A and 23B following the shortest path. Next, after passing through the short sides 221A and 221B of the loop conductor 22, the traveling direction is changed to the Y-negative-direction side, and the path moves toward the ends of the rectangular conductors 23A and 23B on the Y-negative-direction side. When reaching the ends of the rectangular conductors 23A and 23B on the Y-negative-direction side, the traveling direction is changed to the outside in the X-direction along these ends, and when reaching the positions of the ends of the protrusions 231B and 231D on the center side in the X-direction, the traveling direction is changed to the Y-negative-direction side along these ends. Furthermore, when reaching the positions of the bases of the second strip parts 232B and 232D, the traveling direction is changed to the center side in the X-direction along the second strip parts 232B and 232D, and the path moves toward the tips of the second strip parts 232B and 232D. Thus, the length of the current path of the current I3 (i.e., the third distance L3) becomes longer than the second distance L2 = (λ2) / 2. Therefore, the antenna part of the inlay 2 can resonate at radio waves of the carrier frequency f3 of the wavelength λ3 which is longer than the wavelength λ2, and can establish communication with a reader/writer at a desired distance.

That is, the RFID tag 1 according to the first embodiment can resonate with radio waves of carrier frequencies f1 > f2 > f3 (wavelengths λ1 < λ2 < λ3) due to the existence of various current paths as shown by the chain line I1, the solid line I2, and the dotted line I3 in FIG. 6, and can establish communication with a reader/writer at a desired distance. In other words, the RFID tag 1 resonates at radio waves of a wide frequency band of the carrier frequencies f1 to f3, and can establish communication at a desired distance.

That is, by selecting a frequency to be used from among a plurality of frequencies f1, f2, and f3, at least one of the first distance L1 corresponding to the frequency f1, the second distance L2 corresponding to the frequency f2, and the third distance L3 corresponding to the frequency f3 has an electrical length that is a multiple of 1/4 of the wavelength of the frequency to be used of the RFID tag 1, and communication performance can be ensured.

Further, when the dimension of the inlay 2 in the longitudinal direction (X-direction) is standardized to 70 mm and the dimension of the inlay 2 in the short direction (Y-direction) is standardized to 14 mm, since the first distance L1 is constant, the highest frequency f1 among the applicable use frequencies becomes a fixed value. Additionally, by changing the lengths in the longitudinal direction (X-direction) of the pair of first strip parts 232A and 232C and the pair of second strip parts 232B and 232D, that is, the dimension LA illustrated in FIG. 3, the second distance L2 and the third distance L3 can be set as desired lengths. Accordingly, operating frequencies f2 and f3 lower than frequency f1 can be set as desired. Therefore, even when the tag size is standardized, the operating frequency range of the RFID tag 1 can be set as desired, thereby improving versatility.

As described above, the RFID tag 1 according to the first embodiment can form a plurality of current paths having different lengths L1, L2, and L3 as described with reference to FIG. 6 by providing the antenna pattern of the inlay 2 described with reference to FIG. 2 and the like. This makes it possible to increase the variation of the use frequencies, so that the deterioration of the communication performance can be reduced even when the tag size is reduced, and the versatility can be improved. Furthermore, since the inlay 2 includes a plurality of current paths having different electrical lengths, the reception strength of radio waves at the antenna part can be enhanced.

Further, in the RFID tag 1 according to the first embodiment, the IC chip 21 is disposed at the center of the tag in the longitudinal direction (X-direction) and disposed at a position deviated to one side from the center of the tag in the short direction (Y-direction). In such an arrangement of the IC chip 21, it is preferable that the length (LA in FIG. 3) of the pair of first strip parts 232A and 232C and the pair of second strip parts 232B and 232D in the longitudinal direction are all the same. With this configuration, in the antenna pattern in which the IC chip 21 is disposed displaced to one side from the center of the tag in the short direction, the length of the second distance L2 and the length of the third distance L3 can be reliably made different from each other, so that the variation of the use frequency can be reliably increased.

### [Second Embodiment]

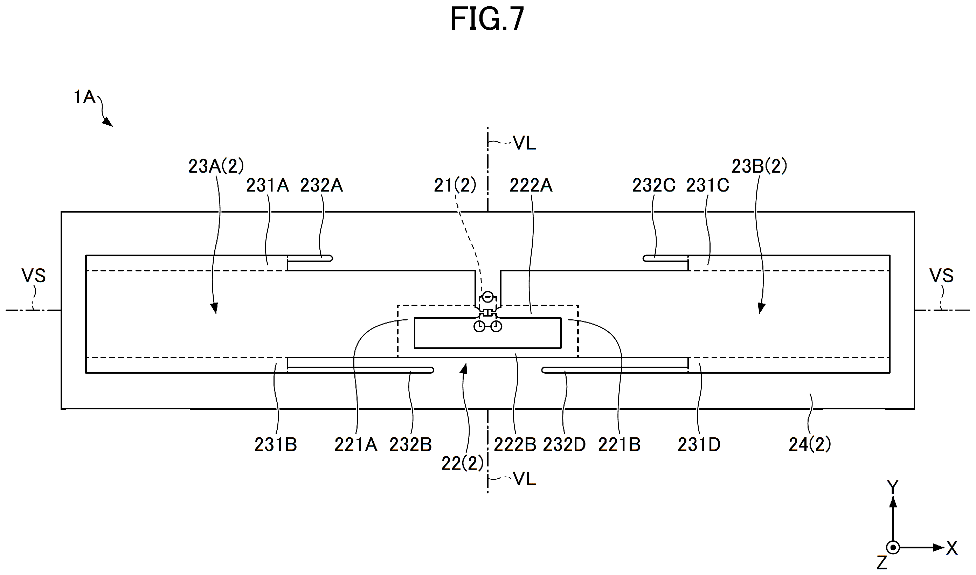

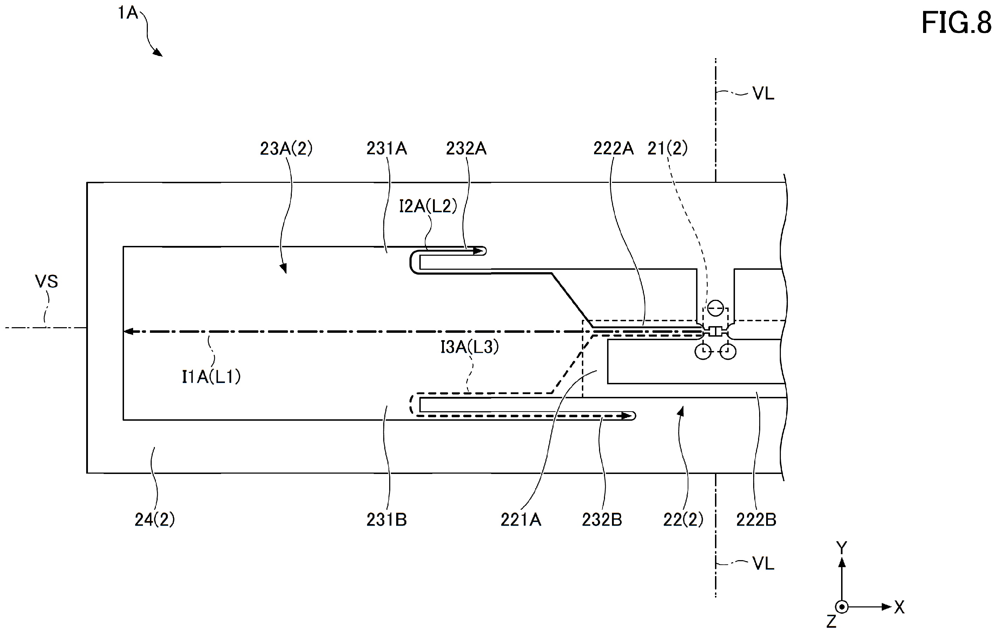

A second embodiment will be described with reference to FIGS. 7 and 8.

FIG. 7 is a plan view illustrating an RFID tag 1A according to a second embodiment. FIG. 7 corresponds to FIG. 2 of the first embodiment.
As shown in FIG. 7, in the RFID tag 1A of the second embodiment, one long side 222A of the loop conductor 22 is disposed at the center of the RFID tag 1 in the short direction (Y-direction), and a connection position with the IC chip 21 is provided at substantially the center of the one long side 222A in the X-direction. Thus, when the IC chip 21 is connected to the loop conductor 22, the IC chip 21 is disposed at the center of the RFID tag 1 in the longitudinal direction and the short direction.

In the second embodiment, portions of the rectangular conductors 23A and 23B on the Y-positive-direction side (top in FIG. 7) of one of the long sides 222A extend to the center of the longitudinal direction side of the short sides 221A and 221B, respectively, and are formed so that there is a clearance therebetween. The width of the clearance in the X-direction is larger than the width of the IC chip 21 in the X-direction when it is installed on the loop conductor 22, for example, as shown in FIG. 7.

In the second embodiment, the IC chip 21 is disposed at the center of the RFID tag 1 in the longitudinal direction and the short direction, which is a point where the first virtual line VL and the second virtual line VS intersect.

In accordance with such arrangement of the IC chip 21, the pair of short sides 221A and 221B and the pair of long sides 222A and 222B of the loop conductor 22 are disposed so as to be linearly symmetrical with respect to the first virtual line VL and are disposed on the Y-negative-direction side of the second virtual line VS. That is, the pair of short sides 221A and 221B are formed so that their ends on the Y-positive-direction side in the extending direction (Y-direction) are substantially at the same position as the second virtual line VS, and their ends on the Y-negative-direction side are at the same position as the ends of the rectangular conductors 23A and 23B on the Y-negative-direction side. The positions of the ends of the pair of long sides 222B on the Y-negative-direction side are the same as the positions of the ends of the rectangular conductors 23A and 23B on the Y-negative-direction side. That is, the long side 222B and the rectangular conductors 23A and 23B are formed so that their ends on the negative Y-direction side are aligned along the X-direction. Further, the long side 222A is disposed at the center of the RFID tag 1 in the short direction (Y-direction).

In particular, in the second embodiment, as the IC chip 21 is disposed in the longitudinal direction and the center of the RFID tag 1 in the longitudinal direction, the pair of first strip parts 232A and 232C and the pair of second strip parts 232B and 232D are formed so that their lengths in the longitudinal direction are different. In the example shown in FIG. 7, the pair of first strip parts 232A and 232C is formed shorter than the pair of second strip parts 232B and 232D.

Since the RFID tag 1A of the second embodiment includes the loop conductor 22 and the rectangular conductor 23 formed by the conductive pattern shown in FIG. 7, it is possible to reduce the deterioration of communication performance due to the influence of moisture contained in the attachment target (e.g., the book 30 illustrated in FIG. 4) and the influence of proximity of RFID tags attached to a plurality of attachment targets (e.g., the books 30-1 to 30-5 illustrated in FIG. 5), as described in the first embodiment with reference to FIGS. 4 and 5. Therefore, if the RFID tag 1A of the second embodiment is applied to an attachment target formed by stacking a large number of papers, such as the books 30, the effect of reducing the deterioration of communication performance can be exhibited more remarkably. Furthermore, since the same effect can be obtained even when the plurality of books 30-1 to 30-5 are stacked, it is possible to read information from each tag with high accuracy.

### <Effect of RFID Tag 1A>

The effect of the RFID tag 1A according to the second embodiment will be further described with reference to FIG. 8. FIG. 8 is a drawing describing the effect according to the second embodiment, and a drawing schematically illustrating the antenna part of the RFID tag 1A has a plurality of current paths of electrical lengths L1, L2, and L3.

As described above, in the RFID tag 1 according to the second embodiment, the IC chip 21 is disposed at the center of the RFID tag 1 in the longitudinal direction and the short direction. That is, the IC chip 21 is disposed at a position equidistant from the position of the pair of first strip parts 232A and 232C in the Y-direction and the position of the pair of second strip parts 232B and 232D in the Y-direction. Moreover, the pair of first strip parts 232A and 232C and the pair of second strip parts 232B and 232D are formed so as to have different lengths in the longitudinal direction (X-direction), that is, dimensions LA illustrated in FIG. 3. In the examples shown in FIGS. 7 and 8, the length LA of the pair of first strip parts 232A and 232C in the longitudinal direction is formed shorter than the length LA of the pair of second strip parts 232B and 232D.

In the RFID tag 1A of the second embodiment, by the arrangement of the IC chip 21 and lengths of the strip parts 232, as shown in FIG. 8, a first distance L1 from the IC chip 21 to both ends of the pair of rectangular conductors 23A and 23B in the longitudinal direction (X-direction), a second distance L2 from the IC chip 21 to the tips of the pair of first strip parts 232A and 232C, and a third distance L3 from the IC chip 21 to the tips of the pair of second strip parts 232B and 232D have different lengths. In the dimensional example shown in FIG. 8, the distances satisfy first distance L1 < second distance L2 < third distance L3. The distances L1, L2, and L3 are same as those of the first embodiment.

At least one of the first distance L1, the second distance L2, and the third distance L3 is set to have an electrical length that is a multiple of 1/4 of the wavelength of the use frequency of the RFID tag 1A. The remainder of the first distance L1, the second distance L2, and the third distance L3 is set to have an electrical length that is different from an electrical length that is a multiple of 1/4 of the wavelength of the use frequency of the RFID tag 1A.

As shown by a chain line in FIG. 8, the current I1A flowing from the connection portion with the IC chip 21 into the inlay 2 travels the shortest path in the X-direction in a substantially linear manner toward both ends of the rectangular conductors 23A and 23B. As a result, the length of the current path of the current I1A (i.e., the first distance L1) is approximately (λ1)/2. Therefore, the antenna part of the inlay 2 can resonate at the radio wave having the carrier frequency f1 of the wavelength λ1, and communication can be established with a reader/writer at a desired distance. This frequency f1 is the highest frequency among the use frequencies applicable as the carrier frequency in the RFID tag 1A.

Further, as shown by a solid line in FIG. 8, the current I2A flowing from the connection portion with the IC chip 21 to the inlay 2 travels the shortest path in a substantially linear manner along the X-direction and proceeds in the direction toward both ends of the rectangular conductors 23A and 23B. Next, after passing through the short sides 221A and 221B of the loop conductor 22, the traveling direction is changed to the Y-positive-direction side and proceeds toward the ends of the rectangular conductors 23A and 23B on the Y-positive-direction side. Further, upon reaching the position of the ends of the rectangular conductors 23A and 23B on the Y-positive-direction side, the traveling direction is changed to the outside in the X-direction along this end and proceeds along this end, and upon reaching the positions of the ends of the protrusions 231A and 231C on the center side in the X-direction, the traveling direction is changed to the Y-positive-direction side along this end and proceeds along this end. Further, upon reaching the positions of the bases of the first strip parts 232A and 232C, the traveling direction is changed to the center side in the X-direction along the first strip parts 232A and 232C and proceeds toward the tips of the first strip parts 232A and 232C. Thus, the length of the current path of the current I2A (i.e., the second distance L2) becomes longer than the first distance L1 = (λ1)/2. Therefore, the antenna part of the inlay 2 can resonate at the radio wave of the carrier frequency f2 of the wavelength λ2 longer than the wavelength λ1, and can establish communication with the reader/writer at a desired distance.

Further, as shown by a dotted line in FIG. 6, the current I3A flowing from the connection portion with the IC chip 21 to the inlay 2 initially travels the shortest path in a substantially linear manner along the X-direction and proceeds in the direction toward both ends of the rectangular conductors 23A and 23B. Next, after passing through the short sides 221A and 221B of the loop conductor 22, the traveling direction is changed to the Y-negative-direction side and proceeds toward the ends of the rectangular conductors 23A and 23B on the Y-negative-direction side. When it reaches the ends of the rectangular conductors 23A and 23B on the Y-negative-direction side, it moves along these ends changing the traveling direction to the outside in the X-direction, and when it reaches the positions of the ends of the protrusions 231B and 231D on the center side in the X-direction, it moves along these ends changing the traveling direction to the Y-negative-direction side. Further, when it reaches the positions of the bases of the second strip parts 232B and 232D, it moves along the second strip parts 232B and 232D changing the traveling direction to the center side in the X-direction and toward the tips of the second strip parts 232B and 232D. Thus, the length of the current path of the current I3A (i.e., the third distance L3) becomes longer than the second distance L2= (λ2)/2. Therefore, the antenna part of the inlay 2 can resonate with radio waves of the carrier frequency f3 of the wavelength λ3 which is longer than the wavelength λ2, and can establish communication with a reader/writer at a desired distance.

That is, the RFID tag 1A according to the second embodiment can resonate with radio waves of carrier frequencies f1 > f2 > f3 (wavelengths λ1 < λ2 < λ3) due to the existence of various current paths as shown by the chain line I1A, the solid line I2A, and the dotted line I3A in FIG. 8, and can establish communication with a reader/writer at a desired distance. In other words, as in the first embodiment, the RFID tag 1A according to the second embodiment resonates at radio waves of a wide frequency band of the carrier frequencies f1 to f3, and can establish communication at a desired distance.

That is, in the RFID tag 1A according to the second embodiment, as in the first embodiment, by selecting a frequency to be used from among a plurality of frequencies f1, f2, and f3, at least one of the first distance L1 corresponding to the frequency f1, the second distance L2 corresponding to the frequency f2, and the third distance L3 corresponding to the frequency f3 has an electrical length that is a multiple of 1/4 of the wavelength of the frequency to be used of the RFID tag 1, and communication performance can be ensured.

Further, when the dimension of the inlay 2 in the longitudinal direction (X-direction) is standardized to 70 mm and the dimension of the inlay 2 in the short direction (Y-direction) is standardized to 14 mm, since the first distance L1 is constant, the highest frequency f1 among the applicable use frequencies becomes a fixed value. Additionally, by changing the lengths in the longitudinal direction (X-direction) of the pair of first strip parts 232A and 232C and the pair of second strip parts 232B and 232D, that is, the dimension LA illustrated in FIG. 3, the second distance L2 and the third distance L3 can be set as desired lengths. Accordingly, operating frequencies f2 and f3 lower than frequency f1 can be set as desired. Therefore, even when the tag size is standardized, also in the RFID tag 1A according to the second embodiment, the operating frequency range of the RFID tag 1A can be set as desired as in the first embodiment, thereby improving versatility.

As described above, the RFID tag 1A according to the second embodiment can form a plurality of current paths having different lengths L1, L2, and L3 as described with reference to FIG. 8 by providing the antenna pattern of the inlay 2 described with reference to FIG. 7 and the like. This makes it possible to increase the variation of the use frequencies, so that the deterioration of the communication performance can be reduced even when the tag size is reduced, and the versatility can be improved. Furthermore, since the inlay 2 includes a plurality of current paths having different electrical lengths, the reception strength of radio waves at the antenna part can be enhanced.

Further, in the RFID tag 1A according to the second embodiment, the IC chip 21 is disposed at the center of the tag in the longitudinal direction (X-direction) and in the short direction (Y-direction). In the case of such an arrangement of the IC chip 21, it is preferable that the pair of first strip parts 232A and 232C and the pair of second strip parts 232B and 232D are formed so as to have different lengths in the longitudinal direction (LA in FIG. 3). With this configuration, in the antenna pattern in which the IC chip 21 is arranged at the center of the tag longitudinal direction and the tag short direction, the second distance L2 and the third distance L3 can be reliably made to have different lengths, so that the variation of the use frequency can be reliably increased.

### [Examples]

Next, examples of the present disclosure will be described in detail.

### <Configuration of First Test>

Example 1 and Comparative Example 1 were configured as described below, and a first test was conducted to verify the effect of the conductor pattern of the inlay 2 on the performance quality of the RFID tag.

### <Example 1>

Two RFID tags 1 shown in FIGS. 1 and 2 were prepared with the dimensions shown in FIG. 3. In the following description, these two tags are referred to as RFID tag 1-1 and RFID tag 1-2, respectively. The prepared RFID tag 1-1 was attached to a sheet of coated paper (Shiroku-ban, 110 kg basis weight; 108.00 mm × 151.00 mm). The attachment position was set at the lower right portion in plan view in which the longitudinal direction of the sheet is defined as the vertical direction, such that the long side and the short side of the tag 1-1 are each spaced 13.00 mm from the outer edge of the sheet.

As the book 30 to which the RFID tag is attached, a comic book volume (Shinsho-ban; width 113 mm × height 176 mm) was selected. The sheet with the RFID tag 1-1 attached was inserted between the back cover 31 and the last page of the volume such that the tag-attached side faced the last page, thereby achieving the same state as that in which the sheet is attached to the inner surface 31A of the back cover 31.

Using the book 30 to which the RFID tags 1 were attached, the reading performance of the RFID tags 1-1 was tested based on the guideline for measuring and evaluating the performance quality of RFID tags (https://www.gs1.org/sites/default/files/docs/epc/Tagged_Item_Test_Method ology.pdf) called TIPP (Tagged Item Performance Protocol) Tagged Item Grading. This guideline was standardized by an international organization called GS1.

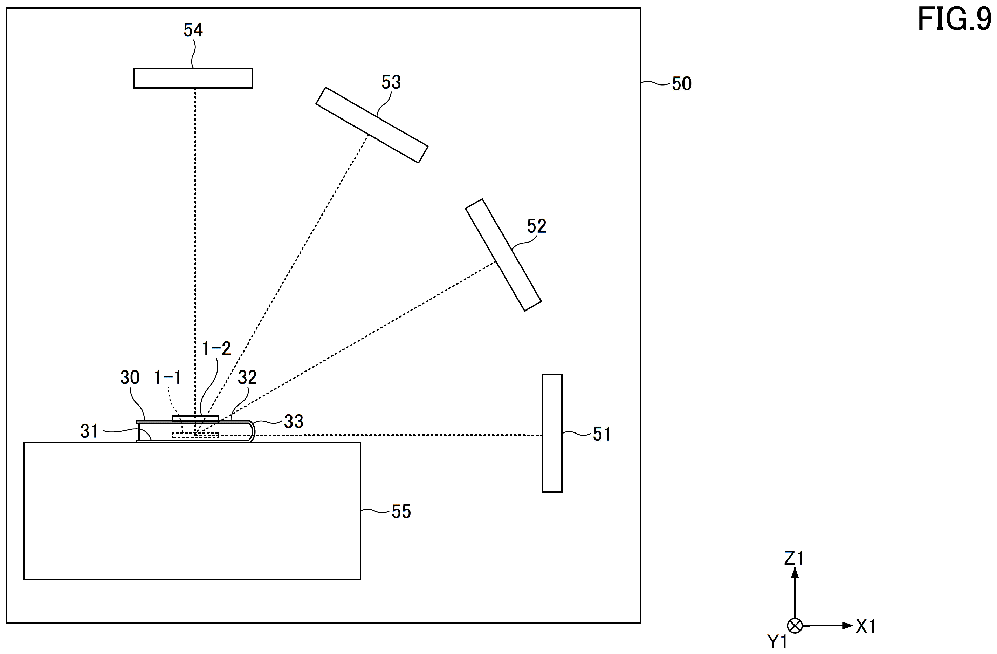

FIG. 9 is a schematic diagram illustrating a measurement environment of a first test according to Example 1. As shown in FIG. 9, four RFID antennas including a first antenna 51, a second antenna 52, a third antenna 53, and a fourth antenna 54 were installed in an anechoic chamber 50. The measurement environment shown in FIG. 9 is based on the provisions of the above-mentioned guidelines. C50 was applied to the anechoic chamber 50. Tagformance Pro manufactured by Voyantic was used as a measuring instrument including the first to fourth antennas 51 to 54.

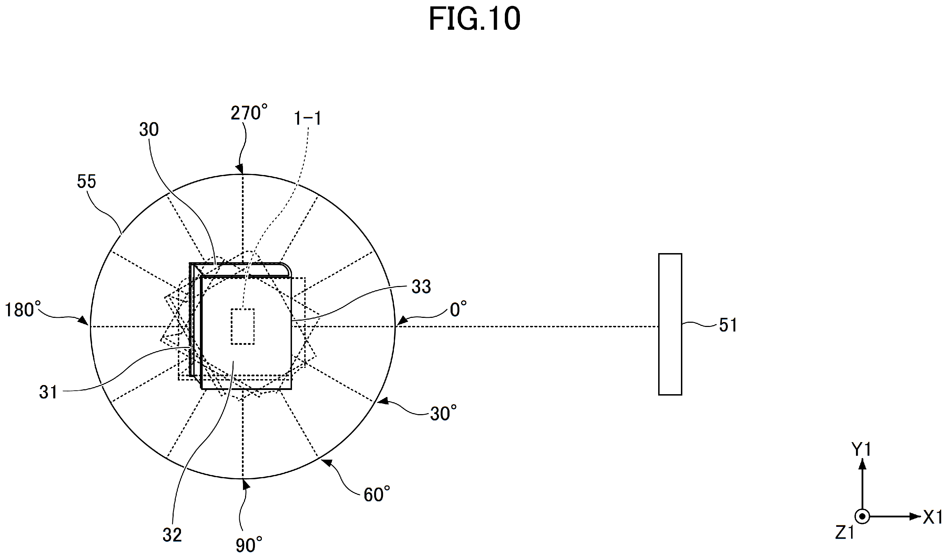

In the following description, an X1-direction, a Y1-direction, and a Z1-direction orthogonal to each other are set. The Z1-direction is a vertical direction of the anechoic chamber 50. The X1-direction and the Y1-direction are horizontal directions of the anechoic chamber 50, and are directions of 0 and 270 degrees of a mounting table 55, respectively (see FIG. 10). For convenience of explanation, the positive direction of a Z1-axis may be referred to as a top, and the negative side of the Z1-axis may be referred to as a bottom.

As shown in FIG. 9, the first antenna 51, the second antenna 52, the third antenna 53, and the fourth antenna 54 are arranged so as to face a predetermined point in the anechoic chamber 50, and as shown by dotted lines in FIG. 9, they are arranged at positions where the direction of facing the predetermined point takes an angle of 0, 30, 60, and 90 degrees from the horizontal direction, respectively. The first to fourth antennas 51 to 54 are arranged along the same X1Z1-plane.

One book 30 to which the RFID tag 1-1 is attached was prepared and placed on the upper surface of the mounting table 55 in the anechoic chamber 50. The book 30 was placed so that the front cover 32 was on the top and the back cover 31 was on the bottom, that is, the RFID tag 1-1 was placed on the lower end side of the book 30. Therefore, the book 30 was arranged in a state where the number of stacked books was 1 book, and the pages of one book 30 were stacked above the RFID tag 1-1. As shown by a dotted line in FIG. 9, the height of the mounting table 55 was adjusted so that the RFID tag 1-1 would be positioned at a predetermined point where the respective opposing directions of the first to fourth antennas 51 to 54 intersect. The first to fourth antennas 51 to 54 were placed so that the distance from the RFID tag 1-1 at the predetermined point was 1 m.

As shown in FIG. 9, another RFID tag 1-2 was placed above the book 30 placed on the mounting table 55, that is, on the front cover 32 of the book 30, as a component for inhibiting the reading of information by each antenna 51 to 54 from the RFID tag 1-1. The RFID tag 1-2 was placed at a position overlapping the RFID tag 1-1 when viewed in the Z1-direction.

FIG. 10 is a plan view illustrating the measurement environment shown in FIG. 9. In FIG. 10, only the first antenna 51 arranged in the horizontal direction among the first to fourth antennas 51 to 54 is shown for convenience of illustration, but the relationship between the other second, third, and fourth antennas 52, 53, and 54 and the orientation of the RFID tag 1-1 and the book 30 is also similar. Although not shown in FIG. 10, an object 60 and the RFID tag 1-2 are stacked on the side of the RFID tag 1-1 in a Z1-positive-direction. As shown in FIG. 10, a state in which the long side of the RFID tag 1-1 and the spine 33 of the book 30 are placed on the mounting table 55 in a direction facing the first to fourth antennas 51 to 54 is set as a 0 degree direction, and the angle is set so as to increase with each rotation of the long side of the RFID tag 1-1 and the spine 33 of the book 30 in a clockwise direction of FIG. 10 with the predetermined point at which the RFID tag 1-1 is placed as the center. The mounting table 55 is rotatable about a rotation axis along the Z1-direction passing through the upper position, and the book 30 placed on the mounting table 55 is configured so that the orientation of the spine 33 can be changed by rotating the mounting table 55.

Under such conditions, when the directions of the long side of the RFID tag 1-1 and the spine 33 of the book 30 were set to ten directions of a 0 degree direction, a 30 degree direction, a 60 degree direction, a 120 degree direction, a 150 degree direction, a 180 degree direction, a 210 degree direction, a 240 degree direction, a 300 degree direction, and a 330 degree direction, sensitivity (average output for reading information from the RFID tag 1-1) of the first to fourth antennas 51 to 54 was measured. Backscatter (response wave intensity from the RFID tag 1-1) of the first to fourth antennas 51 to 54 was measured in two directions of the 0 degree direction and the 180 degree direction.

Using each of the above measured values, it was determined whether the condition of the grade set in the TIPP was satisfied. The grade is an evaluation standard concerning the quality of the reading performance of the RFID tag 1, and a plurality of types are set. In each grade, a reference value is set for each of the above measured values. A different value is set for each grade. When all the measured values exceed the reference value, it can be evaluated that the condition of the corresponding grade is satisfied. A grade that can satisfy the condition when one book 30 is stacked flat above the RFID tag 1-1 to be inspected as in Example 1 was investigated.

### <Comparative Example 1>

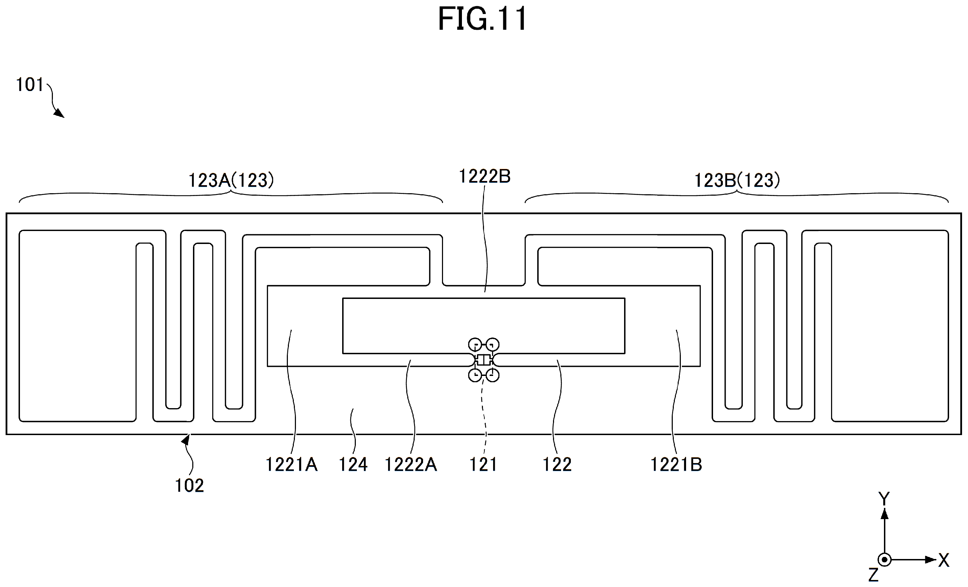

FIG. 11 is a plan view illustrating a conductor pattern of an RFID tag 101 used in Comparative Example 1. FIG. 13 corresponds to FIG. 2, and similarly to FIG. 2, only components related to the inlay of the RFID tag 101 are shown. In Comparative Example 1, measurement was performed under the same conditions as in Example 1, except that the RFID tag 101 having the existing conductor pattern shown in FIG. 13 was used for the two tags attached to and placed on the book 30.

As shown in FIG. 11, the RFID tag 101 according to Comparative Example 1 has an IC chip 121, a loop conductor 122, and an antenna part 123 in the inlay. The inlay includes the loop conductor 122 and the antenna part 123 formed by dry lamination of an aluminum sheet on a base material made of, for example, a synthetic resin film such as polyethylene terephthalate or polypropylene, and the IC chip 121 mounted at a predetermined position.

Since the IC chip 121 is the same as the IC chip 21 of the embodiment shown in FIGS. 1 and 2, description thereof is omitted. The shape and function of the loop conductor 122 are also the same as those of the loop conductor 22 of the embodiment, and the RFID tag 101 has a pair of short sides 1221A and 1221B extending in the short direction and a pair of long sides 1222A and 1222B extending in the long direction. The loop conductor 122 is electrically connected to the IC chip 121 and the antenna part 123.

The antenna part 123 has a structure for achieving impedance conjugate matching with the IC chip 121 for a radio wave having a frequency of, for example, around 920 MHz (e.g., 860 MHz to 960 MHz, more preferably 915 MHz to 935 MHz). The antenna part 123 is provided with two conductor parts (conductor part 123A and conductor part 123B) as a structure for achieving impedance conjugate matching with the IC chip 121. The conductor part 123A and conductor part 123B are conductive wiring patterns which are connected to the loop conductor 122 and extend in directions away from the loop conductor 122 from each other (positive direction side and negative direction side of the X-axis in the example of FIG. 13). The conductive wiring patterns can be formed by known methods such as press working and etching of copper foil or aluminum foil, plating, screen printing of metal paste, or use of metal wires. However, it is formed by etching of aluminum here.

The conductor part 123A and conductor part 123B are formed symmetrically with respect to a virtual line (corresponding to the first virtual line VL in FIG. 2) passing through approximately the center of the IC chip 121. The virtual line is parallel to an XY-plane and extends in the Y-direction. The virtual line also approximately bisects the RFID tag 101 into two regions along the X-direction.

As shown in FIG. 11, the RFID tag 101 according to Comparative Example 1 is different from the RFID tag 1 according to the above embodiment in that the pair of conductor parts 123A and 123B of the antenna part 123 are connected together with one of the long sides 1222B of the loop conductor 122 on the positive Y-direction side, that the shape of the conductor parts 123A and 123B is not a simple rectangular shape like the rectangular conductor 23 of the above embodiment, but a more complicated shape including interconnections extending in a zigzag shape, and that the conductor pattern is not formed linearly symmetrically with respect to the second virtual line VS (see FIG. 2) passing through substantially the center of the RFID tag 101 in the short direction (Y-direction) and extending in the longitudinal direction (X-direction) in a plan view.

In addition, in the RFID tag 101 used in the comparative example, the size of the inlay is the same as that of the RFID tag 1 according to the above embodiment. That is, the dimension of the inlay shown in FIG. 11 in the longitudinal direction (X-direction) is 70 mm, and the dimension of the inlay 2 in the short direction (Y-direction) is 14 mm.

It was determined whether or not the condition of the grade set in the TIPP was satisfied using each measurement value obtained by performing the same measurement as in Example 1. Since Comparative Example 1 is a test environment in which one book 30 is stacked above the RFID tag 101 to be inspected as in Example 1, a grade that can satisfy the condition when one book 30 is stacked as in Example 1 was investigated.

### <Result of First Test>

As a result of the first test described above, it was confirmed that the conditions of grades M25C and M30E set in the TIPP were satisfied in Example 1.

Conversely, the conditions of grades M25C and M30E could not be satisfied in Comparative Example 1.

As described above, it was shown from the result of the first test that even in a state where an RFID tag to be inspected is attached to the book 30 and another RFID tag is stacked above the book 30, compared with the existing conductor pattern of the RFID tag 101 of the comparative example shown in FIG. 11, the conductor pattern of the RFID tag 1 of the present embodiment is less affected by moisture contained in the pages of the book 30 of the attachment target, and even under a condition where other tags that inhibit the reading of information by each antenna 51 to 54 are interposed, communication is less affected by these inhibitors, so that deterioration of communication performance can be reduced.

### <Configuration of Second Test>

Example 2 and Comparative Example 2 were set up as described below, and a second test was conducted to verify the influence of the RFID tag according to the conductor pattern of the inlay 2 on communication performance.

### <Example 2>

In the test environment described with reference to FIG. 9, a reading test of information from the RFID tag 1-1 was performed using only the first antenna 51 arranged in the horizontal direction among the four RFID antennas. The direction of the long side of the RFID tag 1-1 mounted on the mounting table 55 was the 0 degree direction described above, and the long side of the RFID tag 1-1 faced the first antenna 51.

Under such conditions, the frequency characteristics of the RFID tag 1-1 were measured. The measurement frequency band of radio waves for radio communication at the time of measurement was 800 to 1000 MHz, and EIRP (Equivalent Isotropically Radiated Power) was 3.28 W. The measurement of the frequency characteristics was performed in a test environment in which only the RFID tag 1-1 to be inspected was mounted singly at a predetermined point on the mounting table 55, that is, the book 30 and other RFID tags 1-2 were removed from the state shown in FIG. 9. In addition, in Example 2, unlike Example 1, the distance of the first antenna 51 from the mounting position of the RFID tag 1-1 on the mounting table 55 could be changed.

### <Comparative Example 2>

In Comparative Example 2, the measurement was performed under the same conditions as those of Example 2 except that the RFID tag 101 having an existing conductor pattern shown in FIG. 11 was used as the tag to be inspected to be mounted at a predetermined point on the mounting table 55.

### <Results of Test 2>

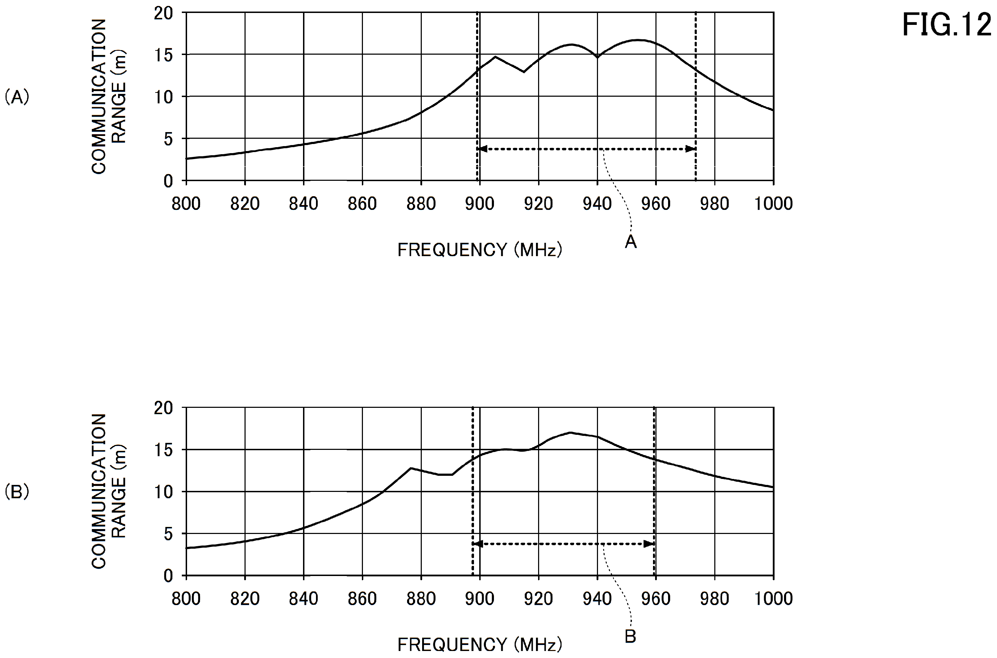

FIG. 12 is a drawing illustrating frequency characteristics of Example 2 and Comparative Example 2 measured in the second test. FIG. 12 (A) shows the frequency characteristics of Example 2, and FIG. 12 (B) shows the frequency characteristics of Comparative Example 2. In (A) and (B), horizontal axes represent frequencies (MHz) of radio waves for wireless communication, and vertical axes represent communicable distances (m) from the RFID tags 1-1 and 101 to the first antenna 51. In FIG. 12, the upper and lower limits of frequencies for which the communicable distance is about 13 m or more in each frequency characteristic are indicated by thick dotted lines, and the frequency ranges between the upper and lower limits are indicated by thick dotted arrows A and B. The ranges of these arrows A and B are used as the "peak frequencies" of each frequency characteristic.

As indicated by the arrow B in FIG. 12 (B), it was confirmed that the range B of the peak frequency moved to the lower frequency side in Comparative Example 2 due to, for example, the reduction of the area of the air clearance portion of the loop conductor 122 by the reduction of the tag size. Conversely, in Example 2, since the range of frequencies applicable to the carrier wave can be increased by providing the first strip parts 232A and 232C and the second strip parts 232B and 232B in the antenna part of the tag, it was confirmed that the range A of the peak frequency can be maintained at the higher frequency side than in Comparative Example 2 and that the peak frequency can be maintained in a wider frequency band than in Comparative Example 2, as indicated by the arrow A in FIG. 12 (A).

### <Configuration of Third Test>

Examples 3 to 8 and Comparative Example 3 were set up as described below, and a third test was conducted to verify the influence of the RFID tag on the communication performance according to the conductor pattern of the inlay 2.

### <Example 3>

In a simulation environment, a model of the RFID tag 1 having the conductive pattern of the inlay 2 shown in FIGS. 1 and 2 was prepared using the dimensions of each part shown in FIG. 3. That is, the outer dimension of the inlay 2 was 70 × 14 mm, and the dimension LA of the first strip parts 232A and 232C and the second strip parts 232B and 232D in the longitudinal direction (X-direction) of the tag was 14.6 mm (see FIG. 3). In addition, the width dimension LB of the strip parts 232A to 232D in the short direction (Y-direction) of the tag was 0.5 mm, and the clearance dimension LC of the strip parts 232A to 232D and the rectangular conductors 23A and 23B in the short direction of the tag was 1.0 mm.

Operation simulation of wireless communication was performed using the prepared model. The measurement frequency band of radio waves for wireless communication was 800 to 1000 MHz, and VSWR (voltage standing wave ratio) characteristics were measured under the simulation environment. In addition, the voltage value around the IC chip 21 in the inlay 2 was measured at the use frequency which took the minimum value in the VSMR characteristics, that is, a value in the state where the sensitivity of the RFID tag 1 was the best.

### <Example 4>

In the model of the RFID tag 1, measurement was performed under the same conditions as in Example 3, except that the dimension LA in the tag longitudinal direction of the first strip parts 232A and 232C and the second strip parts 232B and 232D was shortened by 5 mm to 9.6 mm.

### <Example 5>

In the model of the RFID tag 1, measurement was performed under the same conditions as in Example 3, except that the dimension LA in the tag longitudinal direction of the first strip parts 232A and 232C and the second strip parts 232B and 232D was shortened by 10 mm to 4.6 mm.

### <Example 6>

In the model of the RFID tag 1, measurement was performed under the same conditions as in Example 3, except that the dimension LA of the first strip parts 232A and 232C and the second strip parts 232B and 232D in the longitudinal direction of the tag was increased by 5 mm to 19.6 mm.

### <Example 7>

In the model of the RFID tag 1, measurement was performed under the same conditions as in Example 3, except that the width dimension LB of the strip parts 232A to 232D in the short direction of the tag was increased by 1 mm to 1.5 mm.

### <Example 8>

In the model of the RFID tag 1, measurement was performed under the same conditions as in Example 3, except that the clearance dimension LC of the strip parts 232A to 232D and the rectangular conductors 23A and 23B in the short direction of the tag was increased by 1 mm to 2.0 mm.

### <Comparative Example 3>

In the model of the RFID tag 1, measurement was performed under the same conditions as in Example 3, except that the first strip parts 232A and 232C and the second strip parts 232B and 232D were all deleted.

### <Results of Third Test>

The results of the third test are shown in Table 1 below. The VSMR values shown in Table 1 indicate the minimum values in the VSMR characteristics, that is, the values in the state where the sensitivity of the RFID tag is the best. The frequencies at which the minimum values were obtained were within the range of 923 to 925 (MHz) in all of Examples 3 to 8 and Comparative Example 3.

**[Table 1]**

| | VSMR | IC Chip Voltage Value (V) |
|---|---|---|
| Example 3 | 18.12 | 18.28 |
| Example 4 | 20.53 | 15.30 |
| Example 5 | 26.58 | 12.29 |
| Example 6 | 19.13 | 18.01 |
| Example 7 | 26.78 | 8.74 |
| Example 8 | 26.64 | 8.94 |
| Comparative Example 3 | 48.75 | 2.33 |

As shown in Examples 3 to 6 of Table 1, it was shown that as the dimension LA of the strip parts 232A to 232D was increased from 4.6 mm to 14.6 mm, the VSWR decreased and the sensitivity of the RFID tag 1 was improved. Conversely, when the dimension LA was further increased to 19.6 mm, the VSMR slightly increased and the sensitivity slightly decreased as compared with the case of 14.6 m. Similarly, as shown in Examples 3 to 6, the voltage value of the inlay 2 around the IC chip 21 increases as the dimension LA of the strip parts 232A to 232D is increased from 4.6 mm to 14.6 mm, and the sensitivity of the RFID tag 1 is improved. Conversely, when the dimension LA is further increased to 19.6 mm, the voltage value slightly decreases as compared to the case of 14.6 m, and the sensitivity slightly decreases.

Additionally, as shown in Comparative Example 3 of Table 1, when the strip parts 232A to 232D are not included, the VSMR is remarkably increased as compared to Example 3, and the voltage value of the inlay 2 around the IC chip 21 decreases in each step, and the sensitivity of the RFID tag deteriorates.

As described above, in the RFID tag 1, when the outer dimension of the inlay 2 is 70 × 14 mm, the dimension LA of the strip parts 232A to 232D is preferably in the range of 4.6 mm to 19.6 mm, more preferably 9.4 mm to 19.6 mm, more preferably 14.6 mm to 19.6 mm, and most preferably 14.6 mm.

As shown in Example 7 of Table 1, when the width dimension LB of the strip parts 232A to 232D in the tag short direction is increased by 1 mm as compared to Example 3 to 1.5 mm, the VSMR increases, that is, the VSMR increases as the width dimension LB of the strip parts 232A to 232D is increased. However, when the width dimension LB is 1.5 mm, the VSMR is similar to that of Example 5, the VSMR is much lower than that of Comparative Example 3, and the voltage value around the IC chip 21 is also much higher, so that the sensitivity of the RFID tag 1 is acceptable. As described above, in the RFID tag 1, when the outer dimension of the inlay 2 is 70 × 14 mm, the width dimension LB of the strip parts 232A to 232D in the tag short direction is preferably 0.5 mm to 1.5 mm, more preferably 0.5 mm.

As shown in Example 8 of Table 1, when the clearance dimension LC between the strip parts 232A to 232D and the rectangular conductors 23A and 23B in the tag short direction is increased by 1 mm from Example 3 to 2.0 mm, the VSMR increases, that is, the further the strip parts 232A to 232D are from the rectangular conductors 23A and 23B, the higher the VSMR. However, even when the clearance dimension LC is 2.0 mm, the VSMR is similar to that of Example 5, the VSMR is much lower than that of Comparative Example 3, and the voltage value around the IC chip 21 is much higher, so that the sensitivity of the RFID tag 1 is within an acceptable range. Thus, in the RFID tag 1, when the outer dimension of the inlay 2 is 70×14 mm, the clearance dimension LC between the strip parts 232A to 232D and the rectangular conductors 23A and 23B in the tag short direction is preferably 1.0 mm to 2.0 mm, and more preferably 1.0 mm.

Further, the present invention is not limited to these embodiments, and various variations and modifications may be made without departing from the scope of the present invention.

In the above embodiments, the shape of the inlay 2 of the RFID tags 1 and 1A, in particular, the shape of the antenna pattern including the loop conductor 22 and the pair of rectangular conductors 23A and 23B, is exemplified by a configuration in which the inlay 2 is formed in a horizontally long rectangular shape in which the X-direction is the longitudinal direction (first direction) and the Y-direction is the short direction (second direction) in a plan view viewed from the Z-direction as shown in FIGS. 2 and 7, but the shape of the inlay 2 may be other than a rectangular shape. For example, the inlay 2 may be formed in an arbitrary rectangular shape such as a substantially square shape in which the dimension in the first direction is equal to the dimension in the second direction, or a vertically long rectangular shape in the figure in which the dimension in the first direction is shorter than the dimension in the second direction, that is, the longitudinal direction and the short direction are switched from the examples in FIGS. 2 and 7.

In the above embodiment, the shape of the RFID tags 1 and 1A is exemplified by a configuration in which the inlay 2 is formed in a rectangular shape in which the X-direction is the longitudinal direction (first direction) and the Y-direction is the short direction (second direction) in a plan view viewed from the Z-direction as shown in FIGS. 2 and 7, but the tag shape may be other than a rectangular shape. For example, the shape of the RFID tag may be an oval shape, a trapezoidal shape, a rhombic shape, a circle shape, a square shape, or the like. Even when the shape of the RFID tag is other than a rectangular shape, the shape of the inlay 2 may not necessarily be the same as the shape of the tag, and may be the above-mentioned rectangular shape.

The present application is based on and claims priority to Japanese patent application No. 2023-215948 filed on December 21, 2023, with the Japanese Patent Office, the entire contents of which are hereby incorporated by reference.

### REFERENCE SIGNS LIST

- 1, 1A: RFID tag
- 21: IC chip
- 22: loop conductor
- 23A, 23B: pair of rectangular conductors
- 231A, 231C: first protrusion
- 231B, 231D: second protrusion
- 232A, 232C: first strip part
- 232B, 232D: second strip part
- L1: first distance
- L2: second distance
- L3: third distance
- X: longitudinal direction (first direction)
- Y: short direction (second direction)

## Claims

1. An RFID (Radio Frequency Identification) tag comprising:
an IC chip configured to record identification information;
a loop conductor formed into a loop shape, the loop conductor connected to the IC chip;
a pair of rectangular conductors, each of the rectangular conductors extending from the loop conductor to a corresponding side of both sides in a first direction, and each of the rectangular conductors being formed into a rectangular shape;
a pair of first protrusions, each of the protrusions being provided on a corresponding rectangular conductor of the pair of rectangular conductors and protruding outward relative to the rectangular conductors in a second direction, the second direction being orthogonal to the first direction, from one side of the second direction;
a pair of second protrusions, each of the second protrusions provided on a corresponding rectangular conductor of the pair of rectangular conductors and protruding outward relative to the rectangular conductors in the second direction from another side of the second direction;
a pair of first strip parts, each of the first strip parts formed in a strip shape and provided to protrude along the first direction from a corresponding first protrusion of the pair of first protrusions toward a center in the first direction; and
a pair of second strip parts, each of the second strip parts formed in a strip shape and provided to protrude along the first direction from a corresponding second protrusion of the pair of second protrusions toward the center in the first direction, wherein:
a first distance, which is a distance from the IC chip to an end of both ends of the pair of rectangular conductors in the first direction, a second distance, which is a distance from the IC chip to a tip of each of the pair of first strip parts, and a third distance, which is a distance from the IC chip to a tip of each of the pair of second strip parts, are formed in different lengths from each other;
at least one of the first distance, the second distance, and the third distance is configured to be an electrical length that is a multiple of 1/4 of a wavelength of a frequency used in the RFID tag; and
one or more remaining distances from among the first distance, the second distance, and the third distance is configured to be an electrical length that is different from a multiple of 1/4 of the wavelength of the frequency used in the RFID tag.

2. The RFID tag according to claim 1, wherein:
the IC chip is disposed at the center in the first direction and at a position deviated to one side from a center in the second direction; and
a length in the first direction of each first strip part of the pair of first strip parts and a length in the first direction of each second strip part of the pair of second strip parts are the same.

3. The RFID tag according to claim 1, wherein:
the IC chip is disposed at the center in the first direction and at a center in the second direction; and
a length in the first direction of each first strip part of the pair of first strip parts and a length in the first direction of each second strip part of the pair of second strip parts are formed to be different.
